(19) Europäisches Patentamt
European Patent Office
Office européen des brevets

(11) **EP 0 651 540 B1**

## (12) EUROPEAN PATENT SPECIFICATION

(45) Date of publication and mention
of the grant of the patent:
**10.01.2001   Bulletin 2001/02**

(51) Int Cl.⁷: **H04M 1/00**, H04M 1/65

(21) Application number: **93830433.4**

(22) Date of filing: **29.10.1993**

(54) **Telephone subscriber circuit with galvanic isolating element**

Fernsprech-Teilnehmerschaltung mit einem galvanischen Trennungselement

Circuit téléphonique d'abonné comprenant un élément d'isolation galvanique

(84) Designated Contracting States:
**DE FR GB IT**

(43) Date of publication of application:
**03.05.1995   Bulletin 1995/18**

(73) Proprietor: **STMicroelectronics S.r.l.**
**20041 Agrate Brianza (Milano) (IT)**

(72) Inventor: **Torazzina, Aldo**
**I-20046 Biassono (MI) (IT)**

(74) Representative: **Botti, Mario**
**Botti & Ferrari S.r.l.**
**Via Locatelli, 5**
**20124 Milano (IT)**

(56) References cited:
**EP-A- 0 556 544**          **DE-A- 3 841 814**
**US-A- 4 558 183**          **US-A- 5 151 972**

## Description

This invention relates to telephone subscriber circuits, specifically circuits which enable subscriber apparatus utilizing the signals transmitted over a telephone line but drawing no power from the latter, to be coupled to said line.

Such equipment as telephone answering systems or computer terminals used in lieu of traditional phone sets require, for proper handling of all the information received through the telephone line signals, to be fully uncoupled electrically from the line.

The uncoupling is usually ensured by transformers or photocoupling devices, i.e. elements which can transfer signals transmitted through the line while maintaining galvanic isolation.

Two discrete elements are currently employed for transmitting, to subscriber apparatus which are not powered from the telephone line, the ring signals in a hook-off condition of the line and the other receive signals, such as voice signals, in a hook-on condition of the line.

Also, a transformer element and a photocoupler element may be used together where design requirements make this advisable.

An apparatus for automatically connecting terminal devices to telephone lines is described in US Patent 5 151 972.

The underlying technical problem of this invention is to reduce the number of the components required in a telephone subscriber circuit for extracting the signals transmitted over a telephone line at the subscriber call and acknowledgment stages, and to utilize them in subscriber apparatus not powered through the telephone line, by omitting one of the two galvanic isolation elements employed heretofore.

This reduction in the number of components is desirable to bring down cost and the occupation of integration area while improving reliability.

This technical problem is solved by a telephone subscriber circuit as outlined above and defined in the characterizing parts of the appended claims to this specification.

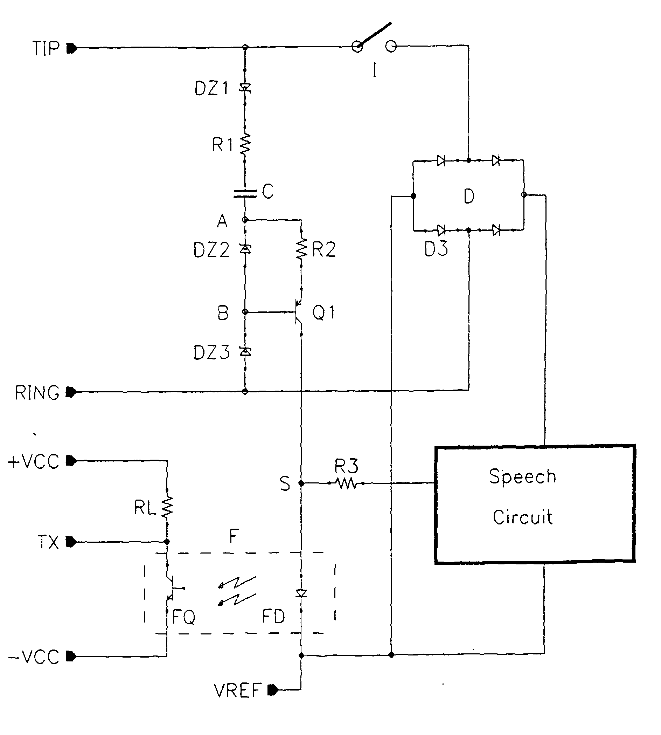

The features and advantages of a telephone subscriber circuit according to the invention will be apparent from the following description of an embodiment thereof, given by way of example and not of limitation with reference to the accompanying drawing.

The single Figure of the drawing shows a diagram, partly in block form, of a telephone subscriber circuit according to the invention which includes a single galvanic isolation element.

The circuit diagram shown in the drawing comprises a speech circuit for transmitting and receiving voice signals, as indicated by a block SPEECH CIRCUIT, which may be a conventional type and is coupled to the two terminals, RING and TIP, of a telephone subscriber line, not shown in the drawing, through a bridge circuit, in this case a diode bridge D in series with a switch I for hooking the line on and off.

In accordance with the invention, a single isolation element, specifically a photocoupler comprising a light receiver and a light emitter, allows the line signals to be transmitted at no loss of function to telephone subscriber apparatus which are not powered from the line, unlike traditional phone sets employing well-known hybrid coil circuits.

In the drawing Figure, the light receiver FQ, as embodied by a phototransistor, is connected in series with a resistor RL between two terminals +Vcc and -Vcc of a voltage supply separate from the line.

The other component, the light emitter FD, is connected between a common voltage reference Vref, which may be viewed as a virtual ground of the telephone circuit, and a circuit node S connected to an output terminal of the speech circuit. Also connected to the reference Vref is a terminal of the bridge circuit defined by the anode of diode D3.

The linking node between the resistor RL and the phototransistor FQ forms a terminal TX for coupling to the subscriber apparatus not powered from the telephone line.

The circuit node S is also coupled to both terminals of the telephone line through a bipolar transistor Q1.

In fact, connected in series with one another between the two terminals of the telephone line are a first Zener diode DZ1 having its anode connected to the line terminal TIP, a resistor R1, a capacitor C, and second and third Zener diodes DZ2 and DZ3 which are reverse-connected with respect to the Zener diode DZ1, the anode of the Zener diode DZ3 being connected to the terminal RING of the line.

The transistor Q1 has its control terminal connected to a node B between the diodes DZ2 and DZ3, and a terminal (the emitter terminal in the drawing) connected via a resistor R2 to a node A between the capacitor C and the diode DZ2.

As the skilled ones in the art will recognize, the call or ring signals and the acknowledgement signals have sharply different frequencies or amplitudes. The call signal has a frequency on the order of ten hertz and amplitude in the 30 to 120 V range, whereas the acknowledgement signal has a voice band and an amplitude not exceeding 1-2 V.

With the line switch I open and in the call condition, the line is still hooked off, whereby the speech circuit is not powered through the bridge circuit and will supply no signal to the photodiode.

Accordingly, in the call condition, the photodiode will only be driven by the transistor Q1.

The breakdown voltage of the Zener diode DZ1 is set at a value equal to the combined breakdown voltages of the other two Zener diodes DZ2 and DZ3.

The value of the breakdown voltage of the Zener diode DZ1 should be higher than the maximum value of the voice signals present on the line.

In this way, only those call signals which, as mentioned, have a much higher amplitude than the speech signals can be seen from the load comprised of the capacitor C and the resistor R1.

With higher values of the Zener diode DZ1 breakdown voltage, in the event of the terminal RING polarity being positive relative to the terminal TIP, or conversely, with voltages in excess of the combined breakdown voltages of the Zener diodes DZ2 and DZ3, an alternating current is flowed through the line which is caused to go through the Zener diodes directly or indirectly.

When the call signal impresses values of the potential at the terminal TIP which are positive relative to those at the terminal RING and exceed the combined breakdown voltages of the Zener diodes DZ2 and DZ3, a current will be flowed through the line having the following value:

$$IL = Vr - (Vz2 + Vz3) / (R1 + Xc)$$

where,

Vr is the value of the call signal,

Vz2 is the breakdown voltage of the diode DZ2,

Vz3 is the breakdown voltage of the diode DZ3,

Xc is the reactance of the capacitor C,

This current creates potentials at the nodes A and B which are balanced by the two Zener diodes DZ2 and DZ3 with respect to the potential of the terminal RING.

The voltage across the nodes A and B also produces a current flow through the transistor Q1 whose value is dependent on the resistor R2.

The collector current of the transistor Q1 flows then through the photodiode, and via the diode D3 of the bridge circuit, which is connected to the virtual ground of the circuit as is the photodiode, flows back to the line through the terminal RING.

The current through the photodiode is transferred to the phototransistor at a predetermined ratio, thereby producing an output voltage Tx which is dependent on the resistor RL.

During the positive half-wave of the call signal the transistor Q1 would not be forward biased, and therefore, cannot supply a current to the photodiode, and the latter is held in the off state.

By suitably selecting the breakdown voltage of the Zener diodes and the resistance values, a square-wave voltage signal can be obtained at the output terminal Tx whose amplitude is equal to the supply voltage to the phototransistor FQ.

This signal can inform the subscriber apparatus, isolated electrically from the line, of the call or ring condition.

Upon the line being closed by means of the switch I, the talk circuit, which in today's apparatus is integrated monolithically, begins to be powered through the diode bridge circuit, which provides the speech circuit with a DC bias unrelated to the polarity condition of the line.

The talk circuit will supply the photodiode directly with a biasing DC plus an alternating signal component obtained from the acknowledgment signal present on the line.

This current is transferred, at a predetermined transfer ratio, to the phototransistor FQ.

The current flowing into the resistor RL from the phototransistor will result in an output signal which is a function of the line signal.

In view of that the current supplied to the photodiode from the talk circuit is to include a DC biasing component to ensure dynamic ranges for the system, which component should not only take account of the peak value of the acknowledgment signal but also of the intrinsic voltage drops across the photodiode, the signal output to the terminal Tx may be cleared of the DC components prior to its utilization by the subscriber apparatus.

Thus, a proportional signal to the acknowledgment signal transmitted from the telephone line can be obtained.

The advantage afforded by this circuit solution is made apparent by that the possibility of using a single isolated photocoupling element involves neither designing problems nor any complicated circuitry.

It will be appreciated that modifications, integrations and substitutions may be made unto the embodiment described hereinabove by way of non-limitative example without departing from the protection scope of the appended claims.

**Claims**

1. A telephone subscriber circuit coupled to the terminals (TIP,RING) of a telephone subscriber line through a bridge circuit (D) and a switch (I), comprising a speech circuit for transmitting and receiving voice signals which is connected to a terminal of said bridge circuit, characterized in that it comprises a galvanic isolation element (F) having at least one input terminal and at least one output terminal for connection to subscriber apparatus not powered from the telephone line, and circuit means (DZ1, DZ2, DZ3, Q1) for transferring call signals connected between the two terminals of the telephone subscriber line, the input terminal of the galvanic isolation element (F) being connected to an output terminal of said transfer circuit means and to an output terminal of the speech circuit.

2. A telephone subscriber circuit according to Claim 1, characterized in that the galvanic isolation element comprises an emitting photodiode (FD) and a receiving phototransistor (FQ), said phototransistor being incorporated to an output stage (FQ,RL) for connection to subscriber apparatus, connected between two terminals (+Vcc,-Vcc) of a voltage supply which is separate from the telephone line, the anode of the photodiode being connected to said output terminal of the speech circuit and to a current generator (Q1,R2) incorporated to the transfer circuit means and actuated by the call signals transmitted from the telephone line, and the cathode of the photodiode being connected to a reference potential (Vref) to which a terminal of the bridge circuit is also connected.

3. A telephone subscriber circuit according to Claim 2, characterized in that the current generator is a transistor having a first terminal and a control terminal, both coupled to the two terminals of the telephone line, and a second terminal connected to the anode of the diode.

4. A telephone subscriber circuit according to Claim 3, characterized in that the transfer circuit means comprise first, second and third bipolar junction elements connected, in series with a capacitive element, between the two terminals of the telephone line, the first and second junction elements having the same opposite polarity from that of the third junction element, the control terminal of the transistor being coupled to a first node provided between the first and the second junction element, and the first terminal being coupled to a second node provided between the second and the third junction element.

5. A telephone subscriber circuit according to Claim 4, characterized in that at least one of the junction elements is a Zener diode.

## Patentansprüche

1. Telefonteilnehmerschaltung, die an die Anschlüsse (SPITZE, RING) einer Telefonteilnehmerleitung über eine Brückenschaltung (D) und einen Schalter (I) angeschlossen ist und aufweist: eine zum Senden und zum Empfangen von Sprachsignalen dienende Sprechschaltung, die an einen Anschluß der Brückenschaltung gekoppelt ist, dadurch gekennzeichnet, daß sie ein galvanisches Trennelement (F) aufweist, das mindestens einen Eingangsanschluß und mindestens einen Ausgangsanschluß für die Verbindung mit dem nicht von der Telefonleitung gespeisten Teilnehmerapparat aufweist, ferner eine Schaltungseinrichtung (DZ1, DZ2, DZ, Q1) zum Transferieren von Rufsignalen, angeschlossen zwischen die beiden Anschlüsse der Teilnehmertelefonleitung, wobei der Eingangsanschluß des galvanischen Trennelements (F) mit einem Ausgangsanschluß der Transferschaltungseinrichtung und einem Ausgangsanschluß der Sprechschaltung verbunden ist.

2. Schaltung nach Anspruch 1, dadurch gekennzeichnet, daß das galvanische Trennelement eine emittierende Photodiode (FD) und einen empfangenden Phototransistor (FQ) aufweist, von denen der Phototransistor in einer Ausgangsstufe (FQ, RL) für den Anschluß an den Teilnehmerapparat eingebaut ist und zwischen zwei Anschlüssen (+ Vcc, -Vcc) einer Spannungsversorgung liegt, die von der Telefonleitung getrennt ist, die Anode der Photodiode mit dem Ausgangsanschluß der Sprechschaltung verbunden und an eine Stromquelle (Q1, R2) in der Transferschaltungseinrichtung gekoppelt ist und durch Rufsignale betätigt wird, die seitens der Telefonleitung übertragen werden, während die Kathode der Photodiode an ein Referenzpotential (Vref) angeschlossen ist, an das auch ein Anschluß der Brückenschaltung gekoppelt ist.

3. Schaltung nach Anspruch 2, dadurch gekennzeichnet, daß die Stromquelle ein Transistor ist, der mit einem ersten Anschluß und einem Steueranschluß versehen ist, die beide mit den beiden Anschlüssen der Telefonleitung gekoppelt sind, und von denen ein zweiter Anschluß an die Anode der Diode gekoppelt ist.

4. Schaltung nach Anspruch 3, dadurch gekennzeichnet, daß die Transferschaltungseinrichtung ein erstes, ein zweites und ein drittes Bipolarübergangselement aufweist, die in Reihe mit einem kapazitiven Element zwischen den beiden Anschlüssen der Telefonleitung liegen, wobei das erste und das zweite Übergangselement gleiche und gegenüber dem dritten Übergangselement entgegengesetzte Polarität aufweisen, der Steueranschluß des Transistors an einem ersten Knoten zwischen dem ersten und dem zweiten Übergangselement gekoppelt ist und der erste Anschluß an einen zweiten Knoten zwischen dem zweiten und dem dritten Übergangselement gekoppelt ist.

5. Schaltung nach Anspruch 4, dadurch gekennzeichnet, daß zumindest eines der Übergangselemente eine Zenerdiode ist.

## Revendications

1. Circuit téléphonique d'abonné couplé aux bornes (TIP, RING) d'une ligne téléphonique d'abonné par l'intermédiaire d'un circuit en pont (D) et d'un commutateur (I) comprenant un circuit de parole connecté à une borne du circuit en pont pour émettre et recevoir des signaux vocaux, caractérisé en ce qu'il comprend un élément d'isolement galvanique (F) ayant au moins une borne d'entrée et au moins une borne de sortie pour connexion à l'appareil d'abonné non alimenté à partir de la ligne téléphonique, et un moyen de circuit (DZ1, DZ2, DZ3, Q1) de transfert des signaux d'appels connecté entre les deux bornes de la ligne téléphonique d'abonné, la borne d'entrée de l'élément d'isolement galvanique (F) étant connectée à une borne de sortie du moyen de circuit de transfert et à une borne de sortie du circuit de parole.

2.  Circuit téléphonique d'abonné selon la revendication 1, caractérisé en ce que l'élément d'isolement galvanique comprend une diode photoémissive (FD) et un phototransistor récepteur (FQ), le phototransistor étant incorporé à l'étage de sortie (FQ, RL) pour connexion à l'appareil d'abonné, connecté entre deux bornes (+Vcc, -Vcc) d'une alimentation en tension qui est distincte de la ligne téléphonique, l'anode de la photodiode étant connectée à la borne de sortie du circuit de parole et à un générateur de courant (Q1, R2) incorporé au moyen de circuit de transfert et actionné par les signaux d'appels émis à partir de la ligne téléphonique, et la cathode de la photodiode étant connectée à un potentiel de référence (Vref) auquel une borne du circuit en pont est également connectée.

3.  Circuit téléphonique d'abonné selon la revendication 2, caractérisé en ce que le générateur de courant est un transistor ayant une première borne et une borne de commande, toutes deux couplées aux deux bornes de la ligne téléphonique, et une seconde borne connectée à l'anode de la diode.

4.  Circuit téléphonique d'abonné selon la revendication 3, caractérisé en ce que le moyen de circuit de transfert comprend des premier, deuxième et troisième éléments à jonction bipolaire connectés, en série avec un élément capacitif, entre les deux bornes de la ligne téléphonique, les premier et second éléments à jonction ayant une même polarité opposée de celle du troisième élément à jonction, la borne de commande du transistor étant couplée à un premier noeud prévu entre les premier et second éléments à jonction et la première borne étant couplée à un second noeud prévu entre les second et troisième éléments à jonction.

5.  Circuit téléphonique d'abonné selon la revendication 4, caractérisé en ce qu'au moins un des éléments à jonction est une diode Zener.